Europäisches Patentamt

European Patent Office

Office européen des brevets

(19)

(11) Publication number: **0 205 174**
**A2**

# (12) EUROPEAN PATENT APPLICATION

(21) Application number: **86108008.3**

(22) Date of filing: **12.06.86**

(51) Int. Cl.⁴: **A 23 L 1/337**
**A 23 K 1/14**

(30) Priority: **13.06.85 JP 129028/85**
**31.01.86 JP 21055/86**

(43) Date of publication of application:
**17.12.86 Bulletin 86/51**

(84) Designated Contracting States:
**DE FR GB IT NL SE**

(71) Applicant: **Shimizu Kagaku Kabushiki Kaisha**
**3622 Kihara-cho**
**Mihara-shi Hiroshima-ken(JP)**

(72) Inventor: **Fukuda, Keishi**
**680-28, Sunami-nishi-machi**
**Mihara-shi Hiroshima-ken(JP)**

(74) Representative: **VOSSIUS & PARTNER**
**Siebertstrasse 4 P.O. Box 86 07 67**
**D-8000 München 86(DE)**

(54) Dietary food of seaweed having ion-exchange capability.

(57) Described is a fibrous dietary food prepared mainly from brown algae by treating them with acids for removing the sodium ions originally contained therein and neutralizing the obtained material with a solution containing potassium, calcium, magnesium and/or iron ions to substitute any of the ions for the removed sodium ions and recovering the obtained product in solid form. The obtained products exhibit a more favorable ion-exchange capability than natural seaweed and when they are incorporated in the living body, they will decrease the sodium content in the living body and consequently they can be used for the prevention of hypertension and cerebral apoplexy.

The obtained products can be used as dietary food either pure or together with other food. They can also be formulated e.g. as tablets, granules and powders in combination with conventional vehicles adopted in the art.

EP 0 205 174 A2

Croydon Printing Company Ltd.

Our ref.: U 643 EP

Case: EP/AF-1

Shimizu Kagaku Kabushiki Kaisha


"Dietary Food of Seaweed Having Ion-exchange Capability"


This invention relates to a dietary food having ion-exchange capability in the human and animal body. The dietary food may be obtained by exchanging sodium ions naturally contained in some kinds of seaweed with potassium, calcium, magnesium and/or iron ions. The product of this invention is suitable as a diet for decreasing the sodium content in the living body and consequently for lowering the blood pressure.

It is well known that an excess intake of salt, i.e. sodium chloride, causes high blood pressure in a human, i.e. hypertension. Some kinds of seaweed, especially brown algae (Phaeophyceae) are known to have the effect of lowering blood pressure. This effect is said to be caused by alginic acid originally contained in seaweed. When seaweed is taken up in a living body, alginic acid acts as an ion-exchange agent for absorbing sodium ions in the body, and excreting them out of the body while releasing other kinds of metal ions such as potassium ions.

It is the object of the invention to provide a novel dietary food which has improved ion-exchange capability and therefore leads to an enhanced blood pressure lowering effect. This object is achieved by the invention which however does not only improve the known effect, i.e. decreasing the salt content in the living body, which seaweeds inherently possess. Moreover it was found that this effect is not only caused by alginic acid but also by a complex and still obscure mechanism. As illustrated in this specification, biological experiments carried out with the pro- ducts of this invention showed results superior to those with sodium alginate.

The subject matter of the invention therefore is a novel dietary food obtainable from seaweed by treating seaweed with an acid for removing sodium ions therefrom, neutralizing the obtained material to a pH of 6 to 7 with a solution containing potassium, calcium, magnesium and/or iron ions and recovering the product in solid form.

The thus obtained four kinds of product may have fibrous or powder form and are used as dietary food exhibiting a favorable activity in experiments with rats.

Each of the four active products of this invention is defined and some examples of dietary compositions containing as an active ingredient the active products of this invention are given in the following.

The raw material of this invention can be selected from seaweed, especially brown algae of genuses such as <u>Durvillea,</u> <u>Asco-phyllum, Laminaria, Eisenia, Ecklonia, Lessonia</u> and <u>Macrocystis.</u>

Examples for acids suitable for removing sodium ions from the raw material are aqueous solutions of hydrochloric acid or sulfuric acid having a pH of less than 2, the quantity of the acid solution used preferably being 3 to 5 times that of the raw material. Neutralization of the obtained suspension of the sodium-deployed raw material is preferably carried out by adding about 10% by weight of an aqueous solution of a water-soluble potassium, calcium, magnesium and/or a ferric salt adjusting the pH to 6 to 7. The neutralized solution sometimes becomes viscous because the produced alginate, one of the components of the product of this invention, is dissolved in the solution. In this case, it is recommended to add more than 30% by weight of alcohol to the neutralized solution in order to precipitate and separate the alginate from the solution.

Isolation of the thus deposited material is conducted by proper means such as concentration to dryness, centrifugation or filtration.

## Examples

### Example 1

Preparation of an active material containing potassium

10 kg of powdered Ascophyllum nodosum, recovered from the North Sea and having a water content of 10% by weight were added to 50 litres of 0.8 N aqueous hydrochloric acid. After stirring for 30 minutes and standing for 30 minutes, the obtained supernatant solution was removed by a siphon, then water was added to the remainders to give 50 litres in total and the solution was again stirred and left standing for 30 minutes, respectively. This procedure was repeated three times. Thereafter, the solution was adjusted to 50 litres in total. Then 10% by weight of potassium hydroxide solution were added to the adjusted solution under stirring until a pH of about 7 was reached and subsequently 50 litres of 80% by weight of ethanol were added under stirring. The thus produced solution was filtered by a filter cloth and the remaining material was centrifuged at a rate of 3.000 rpm for 10 minutes and dried with hot air at 100 C for one hour.
A product of this invention was obtained in fibrous form.
The water content of the obtained material is less than 4%, the potassium content is less than 600 ppm and the ratio of Na/K is less than 0.05.

### Example 2

Preparation of an active material containing calcium

400 litres of diluted hydrochloric acid were added under stirring to 100 kg of pulverized Ascophyllum nodosum, then the hydrochloric acid was removed by filtration and the remainder was washed three times with 200 litres of water. Subsequently a suspension of 10 kg of calcium hydroxide in 200 litres of water was added slowly. The mixture was stirred, adjusted to a pH of 6-7 and then filtered. The thus obtained filtrate was collected and dried at
60 C.
The product obtained is a brown powder and has a slight taste and
odor of seaweed. The content of ion-exchangeable calcium is about
5%.


Example 3


Preparation of an active material containing magnesium


The title material  was obtained in the same manner and quantities of materials as in Exapmle 2, but using Laminaria digitata
instead of Ascophyllus nodosum and 12 kg of magnesium carbonate
instead of 10 kg of calcium hydroxide.
The product obtained is a black powder and has a slight taste and
odor of seaweed. The content of ion-exchangeable magnesium is
about 3%.


Example 4


Preparation of an active material containing iron


The title. material was obtained in the same manner and quantities of materials as in Example 2, but using 40 kg of ferric
sulfate instead of 10 kg of calcium hydroxide. The product obtained is a black powder and has a slight taste and odor of
seaweed. The content of ion-exchangeable iron is about 14%.
The ion-exchange capability of the products of this invention was
tested in vitro in comparison with that of alginic acid as described below:
In an experiment the potassium product of Example 1 and potassium
alginate were separately added to sodium buffer-solutions with a
pH of 1, 2,... 9 and stirred vigorously. The removed test materials were washed with water and  their sodium content was determined. The test showed that the exchanged quantity of sodium was
critically increased at pH 7 with the potassium product of

0205174

Example 1 and at pH 8 with potassium alginate.

Further, the IR absorption spectrum of the potassium product of Example 1 and potassium alginate was compared. An absorption at 1250 cm was found with the potassium product of Example 1 but not with potassium alginate and absorptions at 1300, 950 and 900 cm were found with potassium alginate but not with the potassium product of Example 1.

The above two results show that the active ingredient of the product of this invention is not identical with alginic acid, neither with respect to its purity nor to its chemical composition.

Biological activities of the four kinds of products of this invention are illustrated in the following:

Experiment 1.

Method:

Various groups of rats, each group consisting of 10 spontaneously hypertensive rats (SHR) were fed with food which was separately mixed with the active product of one of Examples 1 to 4 hereinafter referred to as "AFK", "AFCa", "AFMg" and "AFFe", in a quantity of 10%. Control groups of SHR rats were fed with unmixed food.

The experiment was continued for 120 days. Blood pressure and body weight were controlled periodically with all the rats; the results are illustrated in the accompanying drawings in which;

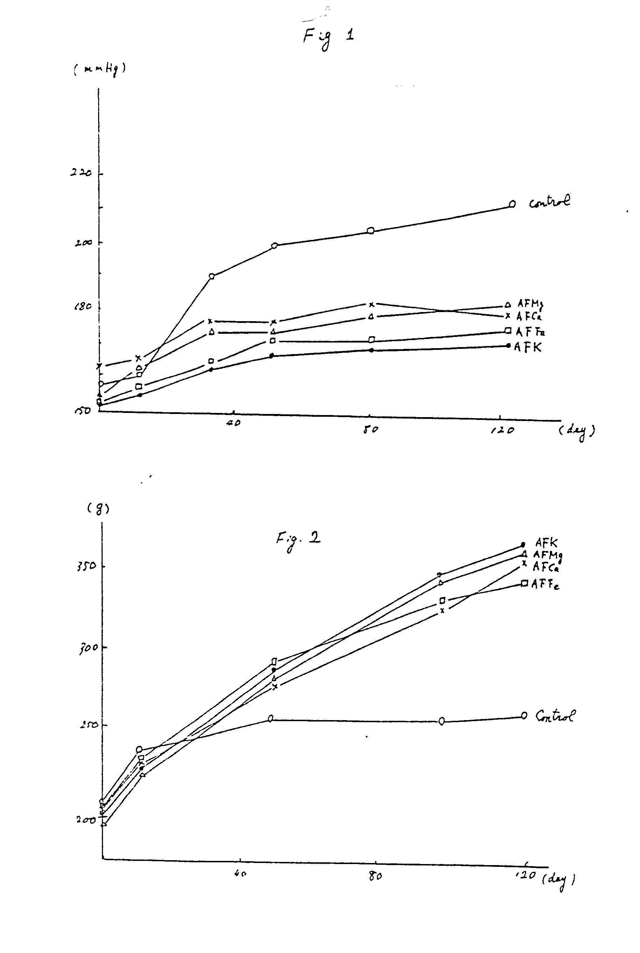

Fig.  1 is a chart showing the change of blood pressure (mmHg) in an interval of 40 days, and

Fig.  2 is a chart showing the change of body weight (g) in an interval of 40 days.

The results show  that the active products of this invention possess a definite and favorable effect of lowering the blood pressure and decreasing the body weight of animals.

0205174

Experiment 2.

All the test rats in Experiment 1 were put into urine-collecting cages on the 100th day of Experiment 1. Their urines were collected separately and the content of potassium, calcium and magnesium in the urine was determined. Furthermore the Fe content of the blood was determined.

The result is shown in Table I:

Table I

| | AFK Group | AFCa Group | AFMg Group | AFFe Group | Control Group |
|---|---|---|---|---|---|
| Excretion of K (mg/day) | 21÷1.4 | | | | 11.5÷1 |
| Excretion of Ca(mg/day) | | 18÷1 | | | 11÷1.9 |
| Excretion of Mg(mg/day) | | | 16÷2.9 | | 10÷1.3 |
| Fe Content in Blood(mg/100ml) | | | | 54÷4.2 | 48÷2.1 |

0205174

As can be seen from Table I, the active products of this invention have the effect of promoting the excretion of sodium ions from the living body.

Another experiment showed that 7 of 9 SHR rats which were fed with AFK of this invention were saved from death caused by celebral apoplexy whereas only 1 of 9 SHR rats of the control group survived.

To sum up the above, as the active products of this invention are produced from a natural source, i.e. seaweed, they are fundamentally safe and harmless for a living body.

When the active products of this invention are taken up by humans or animals pure or together with other food, the products act as an ion-exchange agent and sodium ions in the body are properly exchanged with other ions such as potassium, calcium, magnesium, and/or ferric ions and are excreted out of the body together with the agent. At the same time, the ions released are absorbed by the digestive tract and are available for the host. The active products of this invention used as diet serve to prevent hypertension and cerebral apoplexy with humans and animals. The active products of this invention can be formulated for the purpose of providing health diets in combination with proper adjuvants and vehicles usually adopted in the art, for example:

Tablets (Contents in 1 tablet)

| | |
|---|---|
| AFK (or AFCa, AFMg, and AFFe) | 200mg |
| Crystalline cellulose | 47mg |
| Dextrin | 5mg |
| Lactose | 20mg |
| Carboxymethylcellulose | 5mg |
| Talc | 3mg |

. 0205174

Granules (Contents in %)

| | |
|---|---|
| AFK (or AFCa, AFMg and AFFe) | 67 |
| Crystalline cellulose | 7 |
| Gum arabic | 2 |
| Lactose | 24 |

The active products of this invention are suitable as health diet for humans and animals  both pure and together with other food.

## Claims

1. A dietary food obtainable from seaweed by treating seaweed with an acid for removing sodium ions therefrom, neutralizing the obtained material to a pH of 6 to 7 with a solution containing potassium, calcium, magnesium and/or iron ions and recovering the product in solid form.

2. The dietary food in accordance with claim 1, wherein the seaweed used belongs to the genuses Durvillea, Ascophyllum, Laminaria, Eisenia, Ecklonia, Lessonia or Macrocystis (family Phaeophyceae).

3. The dietary food in accordance with claim 1, wherein the seaweed used is Ascopyllum nodosum or Laminaria digitata.

4. The dietary food in accordance with claim 1, wherein the acid used is hydrochloric acid or sulfuric acid.

5. The dietary food in accordance with claim 1, which is prepared by employing for neutralization a solution containing potassium ions said dietary food having a water content of less than 4% by weight and a potassium content of less than 600 ppm and the ratio of Na/K being less than 0.05.

6. The dietary food in accordance with claim 1, which is prepared by employing for neutralization a solution containing calcium ions said dietary food having about 5% by weight of ion-exchangeable calcium.

7. The dietary food in accordance with claim 1, which is prepared by employing for neutralization a solution containing

magnesium ions said dietary food having about 3% by weight of ion-exchangeable magnesium.

8. The dietary food in accordance with claim 1, which is prepared by employing for neutralization a solution containing ferric ions said dietary food having about 14% by weight of ion-exchangeable iron.

9. A process for preparing the dietary food in accordance with claim 1, characterized by treating seaweed with an acid for removing sodium ions therefrom, neutralizing the obtained material to a pH of 6 to 7 with a solution containing potassium, calcium, magnesium and/or iron ions and recovering the product in solid form.

10. A dietary composition containing as an active ingredient more than 50% by weight of any of the dietary foods claimed in claims 5, 6, 7 and 8 together with conventionally adopted adjuvants and vehicles in the art.

11. The composition in accordance with claim 10, which is in the form of tablets or granules.

1/1

0205174

Fig 1

Fig. 2